# EUROPÄISCHE PATENTSCHRIFT

(11) **EP 1 603 757 B1**
(45) Veröffentlichungstag und Bekanntmachung des Hinweises auf die Patenterteilung: **10.12.2014**
(21) Anmeldenummer: 04718271.2
(22) Anmeldetag: 08.03.2004
(51) Int. Cl.: B42D 15/00

(54) **VERFAHREN ZUR HERSTELLUNG EINER BUCHDECKENEINLAGE UND EINES BUCHARTIGEN WERTDOKUMENTES SOWIE EINE BUCHDECKENEINLAGE UND EIN BUCHARTIGES WERTDOKUMENT**
METHOD FOR THE PRODUCTION OF A BOOK COVER INSERT AND BOOK-TYPE SECURITY DOCUMENT AND BOOK COVER INSERT AND BOOK-TYPE SECURITY DOCUMENT
PROCEDE POUR PRODUIRE UN INSERT DE COUVERTURE DE LIVRE ET UN DOCUMENT DE VALEUR DE TYPE LIVRE, ET INSERT DE COUVERTURE DE LIVRE ET DOCUMENT DE VALEUR DE TYPE LIVRE

(30) Priorität: 12.03.2003 DE 10311110; 20.02.2004 DE 102004008841
(43) Veröffentlichungstag der Anmeldung: 14.12.2005
(73) Patentinhaber: Bundesdruckerei GmbH, 10958 Berlin (DE)
(72) Erfinder: HOEPPNER, Harald, 12309 Berlin (DE); RADTKE, Michael, 12489 Berlin (DE); MÄRTENS, Detlef, 13599 Berlin (DE); PAESCHKE, Manfred, 16352 Basdorf (DE); EHREKE, Jens, 10317 Berlin (DE); LÖER, Thomas, 10961 Berlin (DE); SEIDEL, Rainer, 13467 Berlin (DE); KNEBEL, Michael, 10405 Berlin (DE)
(74) Vertreter: Maser, Jochen
(86) Internationale Anmeldenummer: PCT/EP2004/002347
(87) Internationale Veröffentlichungsnummer: WO 2004/080726

(56) Entgegenhaltungen:
- EP-A- 1 008 459
- FR-A- 2 824 018
- GB-A- 2 352 680
- JP-A- 2004 249 492
- US-A- 3 215 450
- US-A- 6 086 707
- US-A- 6 100 804
- US-A1- 2003 057 286

## Beschreibung

Die Erfindung betrifft ein Verfahren zur Herstellung einer Buchdeckeneinlage sowie eine Buchdeckeneinlage für einen Bucheinband.

Ein buchartiges Wertdokument, wie beispielsweise ein Reisepass oder dergleichen, besteht aus einem Buchblock und einer Passkarte, welche miteinander verbunden werden, bevor diese mit einem Bucheinband zu einem Passbuch gebunden werden. Der Buchblock ist aus einem Papier oder papierähnlichem Material hergestellt, welches Sicherheitsmerkmale umfasst. Die Passkarte weist eine Vielzahl von Sicherheitsmerkmalen auf. Im Falle eines Reisepasses wird der Buchblock passend zur Passkarte personifiziert.

Es besteht ein erhebliches Interesse daran, buchartige Wertdokumente vor Fälschungen zu schützen und die Herstellung von Fälschungen technisch unmöglich oder zumindest unrentabel zu machen. Darüber hinaus soll eine leichte Überprüfbarkeit und Kontrollierbarkeit von Zwischenprodukten für buchartige Wertdokumente oder für Wertdokumente selbst ermöglicht sein.

Aus der FR 2 824 018 A1 geht ein Verfahren zur Herstellung einer Buchdeckeneinlage hervor, bei der ein Datenträger auf einer bandförmigen ersten Schicht aufgebracht wird und im Anschluss eine getrennte zweite bandförmige Schicht mit der ersten Schicht unter Einbindung des Datenträgers zu laminieren. Dabei wird die bahnförmige Schicht ohne Datenträger durch eine Flüssigkeit hindurchgeführt. Diese beiden bandförmigen Schichten werden in einem sogenannten Inlineverfahren zusammengeführt und zueinander laminiert und in diesem laminierten Zustand zur weiteren Bearbeitung wie beispielsweise zum Bedrucken oder Lackieren bereitgestellt.

Aus der US 2003/057286 A1 ist ein als Reisepass ausgebildetes buchartiges Wertdokument bekannt. Dieses buchartige Wertdokument umfasst einen Bucheinband, der einen aus Papier bestehenden Buchblock umgibt. In dem Bucheinband ist ein Mikrochip vorgesehen, in dem verschiedene Daten des Reisepasses abgespeichert sind.

Aus der DE 196 01 358 C2 geht des weiteren ein Papier mit einer integrierten Schaltung hervor, die vorbestimmte Daten enthält, kontaktlos auslesbar ist und nicht lösbar in eine Papiermasse eingebettet ist. Diese integrierte Schaltung dient zur Erhöhung der Fälschungssicherheit in der Komplexität des Herstellungsprozesses. Durch die Einbettung einer integrierten Schaltung in eine Papiermasse ist ein aufwendiges Papierherstellungsverfahren erforderlich, um diese integrierte Schaltung einzubetten. Die mechanische Stabilität der integrierten Schaltungen ist sehr gering, so dass bereits während dem Einbringen der integrierten Schaltung in die Papiermasse als auch bei späteren Bearbeitungsverfahren, wie dem Bedrucken, die Gefahr von Beschädigungen gegeben ist.

Der Erfindung liegt die Aufgabe zugrunde, ein Verfahren zur Herstellung einer Buchdeckeneinlage und einer Buchdeckeneinlage für eine Bucheinlage zu schaffen, bei der die Fälschungssicherheit erhöht wird und eine einfache Überprüfung der Echtheit ermöglicht ist.

Diese Aufgabe wird durch ein Verfahren zur Herstellung einer Buchdeckeneinlage sowie einer Buchdeckeneinlage für einen Bucheinband gemäß den Ansprüchen 1, und 10 gelöst.

Durch das erfindungsgemäße Verfahren wird eine Buchdeckeneinlage mit zumindest einem kontaktlos betreibbaren oder kontaktierbaren Datenträger mit Mikrochip geschaffen, der innerhalb der Außenseiten der Buchdeckeneinlage vorgesehen ist, die zumindest eine erste Schicht und zumindest eine weitere Schicht umfasst. Der zumindest eine Datenträger mit Mikrochip ist durch den schichtweisen Aufbau nicht sichtbar und auch nicht fühlbar in der Buchdeckeneinlage vorgesehen. Dadurch ist auch die Lage des zumindest einen Datenträgers mit Mikrochip nicht oder nur mit erhöhtem Aufwand festzustellen.

Dieser zumindest eine in der Buchdeckeneinlage eingebrachte Datenträger stellt ein zusätzliches Sicherheitsmerkmal dar. Gleichzeitig kann der zumindest eine Datenträger mit weiteren Sicherheitsmerkmalen in Verbindung treten oder gekoppelt sein, welche in der Buchdeckeneinlage und / oder in einem Buchblock oder buchartigen Wertdokument vorgesehen sind. Die Anzahl der gefertigten und in Umlauf befindlichen Wertdokumente, welche die Buchdeckeneinlagen aufweisen, kann ermittelt werden, so dass die Fälschungsrate erfassbar ist. Die Schichten und der zumindest eine Datenträger werden unter leichtem Druck zu einem Verbund miteinander verbunden, so dass der zumindest eine Datenträger sicher und funktionstüchtig eingebunden wird.

Darüber hinaus ermöglicht das erfindungsgemäße Verfahren bei dem zugrunde liegenden Aufbau der Buchdeckeneinlage, dass diese nach der Herstellung des Verbundes unmittelbar auf ein Endformat gestanzt wird. Dadurch kann die vorbestimmte Position einer Lochung oder von Ausprägungen zur Aufnahme des zumindest einen Mikrochips exakt zum Endformat festgelegt werden, so dass eine Beeinträchtigung oder Beschädigung des zumindest einen Datenträgers bei der Stanzung zum Endformat und den weiteren Verarbeitungsschritten nicht erfolgt. Beispielsweise werden Transportgreifelemente außerhalb des Positionierbereiches des zumindest einen Datenträgers angreifen.

Nach einer vorteilhaften Ausgestaltung der Buchdeckeneinlage ist vorgesehen, dass die erste und zumindest eine weitere Schicht aus gleichem Material, wie beispielsweise verstärktem Papier, Pappe oder Karton, ausgebildet sind und vor dem Verbinden der zumindest zwei Schichten die Richtung der Papierfasern der ersten und zumindest einen weiteren Schicht gleichsinnig ausgerichtet wird. Dadurch ist ermöglicht, dass eine Buchdeckeneinlage mit zumindest zwei planparallelen Schichten ausgebildet ist, so dass eine verzugsfreie Anordnung geschaffen wird.

Die Buchdeckeneinlage weist vorteilhafterweise durch die zumindest eine erste Schicht der Buchdeckeneinlage aus festerem Papier, Pappe oder Karton auf. Dadurch ist eine sichere Aufnahme von zumindest einem Datenträger gegeben, so dass auch bei längerer Benutzung der Buchdeckeneinlage in einem buchartigen Wertdokument die Funktionstätigkeit sichergestellt bleibt.

Nach einer weiteren vorteilhaften Ausgestaltung der Erfindung ist vorgesehen, dass die Klebeschicht auf einer Seite mit einer rauen Oberfläche der zumindest einen Schicht aus verstärktem Papier, Pappe, Karton oder dergleichen aufgebracht wird. Aufgrund der Verwendung von verstärktem Papier, Pappe oder Karton weisen die zumindest eine Schicht einer Seite eine raue und auf der anderen Seite eine glatte Oberfläche auf. Zur sicheren Positionierung des zumindest einen Datenträgers und Erhöhung des Zusammenhalts des Verbundes wird die raue Oberfläche mit einer Klebeschicht versehen, auf der zumindest teilweise der Datenträger und die zumindest teilweise eine weitere Schicht liegt.

Vorteilhafterweise sieht eine alternative Ausgestaltung der Erfindung vor, dass die erste und zumindest eine weitere Schicht auch aus zumindest einer polymeren Laminatschicht ausgebildet sind, so dass ein Verbund mit einem den zumindest einen Datenträger umlaufenden Rand hergestellt wird. Durch die vollständige Umfüllung oder Einbettung des zumindest einen Datenträgers in eine Tasche oder Umhüllung wird die Zugänglichkeit zum Datenträger erschwert. Durch diese Laminatschichtumhüllung kann eine flexible Passdecke geschaffen sein, welche darüber hinaus erhöhten Belastungen über viele Jahre standhält.

Nach einer weiteren vorteilhaften Ausgestaltung der Erfindung ist vorgesehen, dass die erste und zumindest eine weitere Schicht durch Erwärmung eines Heißschmelzklebers zusammengefügt werden. Vorteilhafterweise wird die Obergrenze für die Erwärmungstemperatur auf maximal 200° C, insbesondere auf 160° C begrenzt, um den zumindest einen Datenträger vor Beeinträchtigungen zu schützen.

Des weiteren weist eine vorteilhafte Weiterbildung des Verfahrens den Vorteil auf, dass in wenigen Arbeitsschritten ein buchartiges Wertdokument erstellt wird, welches aus mehreren Komponenten zusammengesetzt ist, die jeweils mit Sicherheitsmerkmalen ausgebildet und vorzugsweise miteinander verknüpfbar sind. Das Nichtfühlen und Nichtsehen des zumindest einen Datenträgers stellt bereits ein Sicherheitsmerkmal dar, wobei für die präzise Herstellung die Stanzung auf ein Endformat vorgesehen ist, welches sich an einem Referenzmaß für die Einbringung einer Lochung oder von Ausprägungen in die zumindest eine erste Schicht zur Aufnahme von zumindest einem Mikrochip ausrichtet.

Vorteilhafterweise ist vorgesehen, dass eine Buchdecke mit zumindest einem Datenträger auf einer Rückseite des Bucheinbandes vorgesehen ist und die Vorderseite durch eine Passdecke ohne Datenträger ausgebildet wird. Dadurch kann auf der Außenseite des Bucheinbandes in einem weiteren Bearbeitungsvorgang beispielsweise eine Heißprägung oder weitere Präge- und Bearbeitungsverfahren erfolgen, um Beschriftungen und Kennzeichnungen des Wertdokumentes aufzubringen.

Die erfindungsgemäße Buchdeckeneinlage, welche zumindest einen Datenträger mit Mikrochip aufweist, umfasst eine erste und zumindest eine weitere Schicht, welche den zumindest einen Datenträger umgeben. Die Integration oder Einbindung des zumindest einen Datenträgers in eine Buchdeckeneinlage ermöglicht eine Erhöhung der Sicherheitsmerkmale bei Büchern, Wertdokumenten, Urkunden oder weiteren Umschlägen oder Einbänden, welche für Dokumente, Gegenstände oder dergleichen vorgesehen ist. Durch die nicht sichtbare und nicht fühlbare Anordnung ist dieses Sicherheitsmerkmal nicht sofort feststellbar, wodurch bereits eine Erhöhung der Sicherheit gegeben ist. Darüber hinaus kann eine Verknüpfung der Information des zumindest einen Datenträgers mit weiteren Sicherheitsmerkmalen erfolgen. Es können bspw. eine induktive, kapazitive, magnetische Codierung, eine Infrarot-Codierung, Wiegand-Codierung usw., gegeben sein, die entweder getrennt in der Buchdeckeneinlage oder in Verbindung mit den weiteren Bestandteilen stehen, denen die Buchdeckeneinlage zugeordnet ist. Darüber hinaus wird durch die präzise Herstellung sichergestellt, dass Beschädigungen der Datenträger mit Mikrochip während der weiteren Verarbeitung nach dem Herstellen des Verbundes verhindert sind.

Nach einer vorteilhaften Ausgestaltung der Erfindung ist vorgesehen, dass die erste oder zumindest eine weitere Schicht eine Schichtdicke umfassen, die gleich oder kleiner ist als die Gesamtschichtdicke oder einer Dicke eines Verbundes, der aus mehreren Schichten ausgebildet ist. Die Buchdeckeneinlagen sind traditionell mit einer Schichtdicke von beispielsweise 550 µm vorgesehen. Der Schichtaufbau beziehungsweise Schichtenverbund ist gleich oder kleiner ausgebildet und umfasst zumindest einen Datenträger mit Mikrochip. Dadurch kann eine Buchdeckeneinlage in die bisherigen Herstellverfahren integriert werden und das optische Erscheinungsbild aufrecht erhalten bleiben.

Nach einer vorteilhaften Ausgestaltung der Buchdeckeneinlage ist vorgesehen, dass eine erste und eine zweite Schicht aus Pappe oder Karton vorgesehen ist, welche eine gleiche Wandstärke aufweist. Dadurch ist ein sehr einfacher Herstellungsprozess gegeben, da gleiche Materialien und Materialstärken verwendet werden. Die Wandstärke der ersten und zweiten Schicht ist auf die Dicke des Aufbaus des zumindest einen Datenträgers und der Klebeschichten abgestimmt.

Nach einer alternativen Ausgestaltung der Buchdeckeneinlage ist vorgesehen, dass zumindest eine erste Schicht aus verstärktem Papier, Pappe, Karton oder dergleichen ausgebildet ist, welche eine Ausprägung oder Vertiefung umfasst, in der der zumindest eine Datenträger und die zumindest eine weitere Schicht eingebracht ist. Die zumindest eine weltere Schicht, welche den Datenträger überdeckt, kann aus demselben Material wie die erste Schicht oder einem hiervon abweichenden Material vorgesehen sein. Beispielsweise können fließfähige und aushärtbare Kunststoffe, Gießharzen oder Einbettmassen vorgesehen sein.

Die Buchdeckeneinlage weist nach einer bevorzugten Ausführungsform zumindest eine erste Schicht auf, welche zusätzliche Sicherheitsmerkmale umfasst. Diese Sicherheitsmerkmale, wie beispielsweise ein Metallfaden, können mit dem zumindest einen Datenträger zusammenwirken, um ein komplexeres Sicherheitsmerkmal auszubilden und die Fälschung zu erschweren.

Die Buchdeckeneinlage ist bevorzugt zur Herstellung eines buchartigen Wertdokumentes vorgesehen, welches den Vorteil aufweist, dass das sichere und exakte Einbringen von zumindest einem Datenträger die Fälschungssicherheit erhöht. Bei Manipulationen ist nicht nur erforderlich, dass zumindest ein Datenträger mit Mikrochip in die Buchdeckeneinlage einzubringen ist, sondern es ist ebenfalls zu berücksichtigen, dass ein weiterer Datenabgleich mit weiteren Sicherheitsmerkmalen des Buchblockes vorzunehmen ist. In dem Datenträger können Sicherheitsdaten, personenbezogene Daten beispielsweise aus der Passkarte und weitere Informationen abgespeichert werden, welche wiederum nur mit speziellen Auslesegeräten einlesbar und abfragbar sind. Dadurch kann eine Verknüpfung des Bucheinbandes mit dem Buchblock erfolgen. Des weiteren kann bereits eine Nummer des Blanko-Passes mit/oder ohne einer Prüfziffer in dem Datenträger abgespeichert werden. Dadurch und durch ggf. weitere Verknüpfungen mit Sicherheitsmerkmalen kann eine Erhöhung der Sicherheit hinsichtlich Verfälschung und Austausch zum Buchblock oder einer Passkarte gegeben sein.

In dem kontaktlos arbeitenden Datenträger können darüber hinaus biometrische Daten, bspw. Fingerprints oder Daten aus den maschinenlesbaren Zeilen einer Passkarte, abgelegt werden, so dass weitere personenspezifische Daten in dem Wertdokument abgespeichert sind. Die Einbringung des zumindest einen Datenträgers in die Buchdeckeneinlage kann des weiteren auch zur Ortung verwendet werden. Des weiteren weist die erfindungsgemäße Ausgestaltung eines buchartigen Wertdokumentes mit einer Buchdeckeneinlage, welche zumindest einen Datenträger umfasst, den Vorteil auf, dass eine Anbindung der Buchdeckeneinlage zum Buchblock oder zur Passkarte oder Identifikationskarte ermöglicht ist.

Darüber hinaus kann vorteilhafterweise vorgesehen sein, dass bspw. auf der Vorder- und/oder Rückseite des Bucheinbandes jeweils und/oder zumindest teilweise ein Datenträger eingebracht ist. Die abgespeicherten Informationen werden gesplittet, so dass ein Teil der Informationen auf einem ersten Datenträger und ein weiterer Teil der Informationen auf dem zumindest weiteren Datenträger abgespeichert sind, wobei eine beliebige Aufteilung der abgespeicherten Daten ermöglicht ist. Diese Hinterlegung der Daten zusammen mit der Abfrage von personifizierten Daten auf einer Passkarte oder Identitätskarte oder Informationen des Buchblockes erhöhen des weiteren die Fälschungssicherheit eines derartigen buchartigen Wertdokumentes. Des weiteren können Teile des zumindest einen Datenträgers auf der Rückseite, der Vorderseite und/oder des Rückens vorgesehen sein, welche auch über Verbindungsstellen zueinander verknüpft sein können. Dabei kann die Verknüpfung oder Aufteilung von einem oder mehreren Datenträger bereits ein Sicherheitsmerkmal darstellen.

Weitere vorteilhafte Ausgestaltungen und Weiterbildungen der Erfindung sind in weiteren Ansprüchen angegeben.

Die Erfindung sowie weitere vorteilhafte Ausführungsformen und Weiterbildungen derselben werden im folgenden anhand dem in der Zeichnung dargestellten Beispiel näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Figur 1: eine schematische Schnittdarstellung einer erfindungsgemäßen Buchdeckeneinlage,
- Figur 2: eine schematische Schnittdarstellung einer alternativen Ausführungsform zu Figur 1,
- Figur 3: eine schematische Schnittdarstellung einer weiteren alternativen Ausführungsform zu Figur 1,
- Figur 4: eine schematische Schnittdarstellung einer alternativen Ausführungsform zu Figur 3,
- Figur 5: eine schematische Darstellung einzelner Verfahrensschritte zur Herstellung einer erfindungsgemäßen Buchdeckeneinlage gemäß Figur 1,
- Figur 6: eine schematische Draufsicht auf ein Bucheinband mit zumindest einer erfindungsgemäßen Buchdeckeneinlage,
- Figur 6a: eine schematische Draufsicht auf einen Datenträger mit Mikrochip,
- Figur 7: eine schematische Darstellung zur Herstellung eines Bucheinbandes mit einer erfindungsgemäßen Buchdeckeneinlage,
- Figur 8: eine schematische Draufsicht auf ein erfindungsgemäßes buchartiges Wertdokument,
- Figur 9: eine schematische Schnittdarstellung einer Rückseite des buchartigen Wertdokumentes gemäß Figur 8,
- Figur 10a: eine schematische Schnittdarstellung eines erfindungsgemäßen flexiblen Bucheinbandes,
- Figur 10b: eine schematische Seitenansicht einer alternativen Ausführungsform eines Bucheinbandes zu Figur 10a und
- Figur 11: eine schematische Darstellung der Verfahrensschritte zur Herstellung des buchartigen Wertdokumentes.

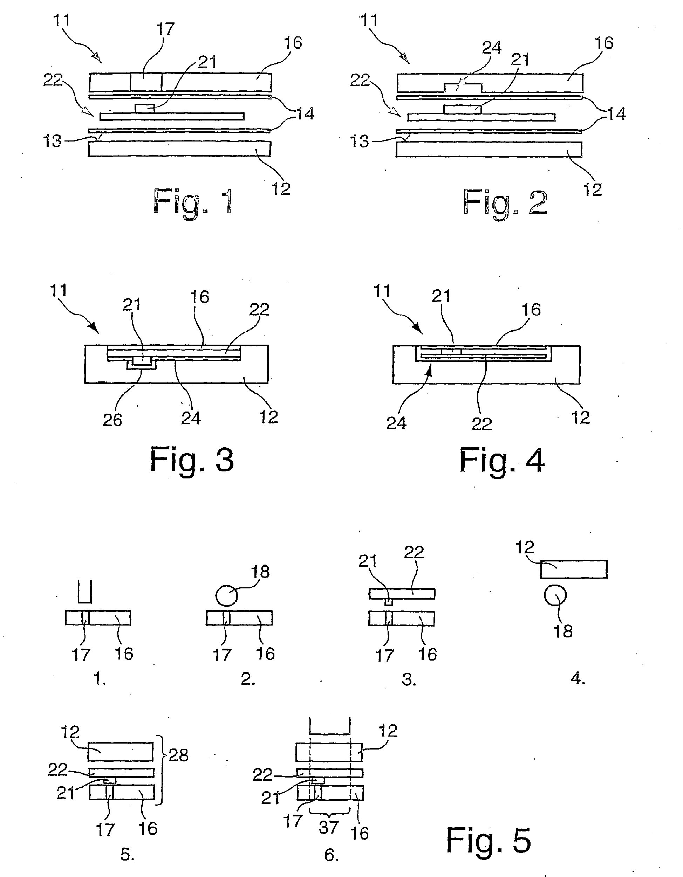

In den Figuren 1 bis 4 sind beispielhaft alternative Ausführungsformen einer erfindungsgemäßen Buchdeckeneinlage 11 dargestellt. Diese Buchdeckeneinlage 11 kann vielfältig eingesetzt werden und ist nicht auf die Verwendung von buchartigen Wertdokumenten wie bspw. Reisepässe beschränkt. Derartige Buchdeckeneinlagen 11 können ebenso zur Sicherung von Fälschungen bei Büchern, Urkunden oder sonstigen Gegenständen eingesetzt werden, bei denen die Buchdeckeneinlage auch unabhängig von der Funktion einer Buchdecke, wie beispielsweise als Unterlage, Einlage oder Auflage einsetzbar ist.

Die Buchdeckeneinlage 11 gemäß Figur 1 umfasst eine erste Schicht 12, welche vorteilhafterweise aus verstärktem Papier, Pappe oder Karton ausgebildet ist. Die erste Schicht 12 weist eine raue und eine glatte Oberfläche auf. Die raue Oberflächenseite bildet die Innenseite 13, auf die eine Klebeschicht 14 aufgebracht ist. Die zumindest eine weitere Schicht 16 oder gemäß dem Ausführungsbeispiel oder zweite Schicht 16 entspricht der ersten Schicht 12 und nimmt auf der rauen Seite, welche die Innenseite 13 bildet, ebenfalls eine Klebeschicht 14 auf. In die zweite Schicht 16 ist eine Lochung 17 eingebracht, welche zur Aufnahme eines hervorstehenden Mikrochips 21 eines Datenträgers 22 dient. Bspw. kann in dieser Lochung 17 der Mikrochip 21 angeordnet sein. Die gesamte Schichtdicke der Buchdeckeneinlage 11 umfasst bspw. 550 µm. Die Schichten 12 und 16 sind vorzugsweise gleich dick und aus gleichem Material ausgebildet und weisen jeweils bspw. 250 µm auf. Die verbleibenden 50 µm werden von der Klebeschicht und dem Datenträger 22 eingenommen. Dieser Aufbau und deren Maße sind nur beispielhaft. Alternativ ist vorstellbar, dass bspw. die Schicht 16 wesentlich stärker als die Schicht 12 oder umgekehrt ausgebildet ist, wobei die andere Schicht 12, 16 an die Stärke der ersten Schicht angepasst wird. Ebenso kann vorgesehen sein, dass eine der beiden Schichten 12, 16 aus Pappe, verstärktem Papier oder Karton ausgebildet ist, wobei die weitere Schicht aus Kunststoffmaterial hergestellt ist. Die Schichten 12, 16 können auch durch mehrere laminierte Schichten gebildet werden. Für einen Schichtaufbau aus wenigstens zwei Schichten 12, 16 können auch unterschiedliche Materialien ausgewählt werden. Bei der Materialauswahl ist grundsätzlich keine Beschränkung gegeben, jedoch sind vorteilhafterweise leichte, nichtleitende Materialien wie Papier, textiles Gewebe, Kunststoff oder Folien, vorzugsweise aus recyclebarem Material vorgesehen.

Die erste und zumindest eine weitere Schicht ist bevorzugt aus zumindest einer thermoplastischen Folie oder aus einer sandwichartigen Folienkombination hergestellt. Diese Folien können vorzugsweise auch transparent ausgebildet sein. In Abhängigkeit der gewünschten Dicke und der Festigkeit bzw. den Anforderungen zur Anbringung von Sicherheitsmerkmalen in die Laminatschicht können die einzelnen Werkstoffe oder Werkstoffkombinationen als auch der sandwichartige Aufbau ausgewählt werden.

Eine alternative Weiterbildung der Erfindung sieht vor, dass die erste oder zumindest eine weitere Schicht aus einem ein Antennensubstrat enthaltenden Material hergestellt wird. Dadurch kann der Einsatz von Chipmodulen mit einer externen Spule oder Antenne vorgesehen sein, welche durch Kontaktierung an den Kontaktstellen des Antennensubstrates eine Transpondereinheit bilden. Dieses Antennensubstrat kann Dicken beispielsweise im Bereich zwischen 6 und 150 µm aufweisen und je nach dem erforderlichen Kontaktierverfahren aus PIT, PI, FR-4, Aramit, PVC, ABS, PE, PA, PP, PE, Teslin oder dergleichen bestehen. Die Antennenspulen können vorteilhafterweise aus lackisoliertem Metalldraht, insbesondere Kupferdraht mit beispielsweise einer Ultraschall-Sonotroden-Verlegetechnik hergestellt werden. Diese Antennenspulen können auch als Luftspule in eine entsprechende Aussparung eingelegt und laminiert werden. Ebenfalls können siebdrucktechnisch mittels polymeren und leitfähigen Pasten hergestellte Ausführungsformen vorgesehen sein. Alternativ können auch flexible Leiterplatten in subtraktiver Technik, als Ätztechnik in Kupfer oder Aluminium oder dergleichen verwendet werden.

Die Ausgestaltung der ersten und zumindest einen weiteren Schicht aus zumindest einer Laminatschicht weist neben dem Vorteil zur Bildung einer flexiblen Passdecke des weiteren die Möglichkeit auf, dass in die O-berfläche der Laminatschicht oder zwischen einen sandwichartigen Aufbau der Folienkombinationen weitere Sicherheitsmerkmale vorgesehen sein können, welche die Fälschungssicherheit erhöhen.

In Figur 2 ist eine Buchdeckeneinlage 11 dargestellt, deren Aufbau der Figur 1 entspricht. Abweichend zu Figur 1 weist dieses Ausführungsbeispiel eine Ausprägung 24 auf, welche zur Aufnahme eines hervorstehenden Mikrochips 21 eines Datenträgers 22 dient. Diese Ausprägung 24 kann durch einen Fräsvorgang oder einen Prägevorgang vorgesehen sein. Alternativ kann auch eine Kavität bereits in der Schicht bei der Herstellung eingebracht sein, um darin den Datenträger 22 zu positionieren. Die Ränder der Ausprägung können auch als Schräge ausgebildet oder abgerundet sein.

In Figur 3 ist eine alternative Ausführungsform zu Figur 1 dargestellt. Eine erste Schicht 12 umfasst im Randbereich eine Gesamtschichtdicke für die Buchdeckeneinlage. In einem mittleren Bereich ist eine Ausfräsung oder Ausprägung 24 vorgesehen, welche an die Form des einzubringenden Datenträgers 22 angepasst ist. Die Ausprägung oder Vertiefung kann auch durch einen mehrschichtigen Aufbau ausgebildet werden. Die Tiefe der Ausprägung entspricht zumindest der Aufbauhöhe des Datenträgers 22 und einer Schichtdicke einer zweiten Schicht 16. Diese zweite Schicht 16 kann aus demselben Material wie die Schicht 12 bestehen. Es kann ebenso vorgesehen sein, dass ein Giessharz, eine Einbettmasse oder dergleichen vorgesehen ist. Ebenso kann eine Schutzfolie aufkaschiert werden, um eine plane Oberfläche zu bilden. Beispielhaft ist eine napfförmige Vertiefung 26 eingebracht, um den Mikrochip 21 des Datenträgers 22 aufzunehmen.

Die Ausführungsformen gemäß den Figuren 1, 2 und 3 haben gemeinsam, dass die Lochung 17 bzw. die Ausprägung 24, 26 zur Aufnahme des zumindest einen Mikrochips 21 des Datenträgers 22 dient und die weitere Positionierung sehr genau festlegt, um eine positionsgenaue Aufnahme des Datenträgers 22 zwischen den Schichten 12, 16 in der Buchdeckeneinlage 11 sicherzustellen.

In Figur 4 ist eine weitere alternative Ausführungsform der Buchdeckeneinlage 11 dargestellt, bei welcher eine u-förmige Ausprägung oder Ausfräsung 24 auf einer vorzugsweise rauen Oberflächenseite der Schicht 12 eingebracht ist. Der Aufbau und die Ausführungsvarianten entsprechen denen gemäß Figur 3. Der Mikrochip 21 des Datenträgers 22 kann auch nach unten liegend in der Ausprägung 24 gemäß Figur 4 angeordnet sein.

Die Buchdeckeneinlagen 11 gemäß Figur 3 und 4 werden bevorzugt in einem Bucheinband derart positioniert, dass die zweite Schicht 16 von einem Vorsatz 46 überklebt wird, wie nachfolgend noch beschrieben wird.

In Figur 5 sind mehrere Arbeitsschritte dargestellt, durch welche eine Buchdeckeneinlage 11 hergestellt wird.

Eine erste Schicht 16, welche Außenabmessungen aufweist, die größer als das Endmaß sind, wird zur Einbringung einer Lochung 17 einer Stanze zugeführt, in der die Lochung 17 positionsgenau eingebracht wird. In einem nachfolgenden Schritt wird auf der Innenseite 13 der Schicht 16 eine Klebeschicht durch eine Rolle 11, ein Rakel oder dergleichen aufgebracht. Alternativ kann es sich auch um einen sogenannten Transferkleber handeln, der auf einer Folie bereitgestellt wird. Die Folie wird nach dem Aufbringen des Klebers auf der Schicht 16 abgezogen. Weitere Klebemittel können ebenso eingesetzt werden, die insbesondere an die Materialien der Schichten 12, 16 angepasst und abgestimmt sind. Des weiteren kann die Klebeschicht auf den Datenträger 22 aufgebracht werden oder auf der Schicht und den Datenträger 22. Ebenfalls kann der Datenträger 22 mit einer ein- oder beidseitigen Klebeschicht versehen sein, welche durch eine Schutzfolie geschützt ist und vor dem Verkleben abgezogen wird. Im Anschluss daran wird der Datenträger 22 positionsgenau zur Schicht 16 aufgebracht. Gleichzeitig oder nachfolgend wird die Schicht 12 auf der Innenseite 13 mit Kleber versehen. Alternativ kann nur oder zusätzlich auf der Vor- und/oder Rückseite des Datenträgers 22 ein Klebemittel aufgebracht werden. In einem fünften Schritt werden die Komponenten zueinander positioniert und unter leichtem Druck verklebt. In Abhängigkeit des verwendeten Klebers kann eine Erwärmung erfolgen, welche mindestens kleiner 200°, vorteilhafterweise ≤ 160° vorgesehen ist. Bei der Verwendung von gleichen Materialien für die Schicht 12 und 16 wird die Papierfaserausrichtung der ersten Schicht 12 und weiteren Schicht 16 gleichsinnig erfolgen, so dass ein planes Verkleben, insbesondere bei direktem Kontakt, ermöglicht ist und ein nachträgliches Aufwerfen oder Wölben verhindert ist. Dieser verklebte Verbund 28 wird in einem nachfolgenden Arbeitsschritt auf ein Endformat gestanzt. Dieser unmittelbar sich anschließende Arbeitsschritt weist den Vorteil auf, dass eine exakte Positionierung des zumindest einen Datenträgers 22 in der fertigen Buchdeckeneinlage 11 gewährleistet ist, da die Lochung 17 und Einbringung des Datenträgers 22 auf ein Referenzmaß abgestellt sind, an welchem sich auch die Stanzung auf Endformat 37 ausrichtet. Die auf das Endformat 37 gestanzte Buchdeckeneinlage 11 wird nunmehr zur Herstellung eines Bucheinbandes 31 in einem Magazin zur Verfügung gestellt.

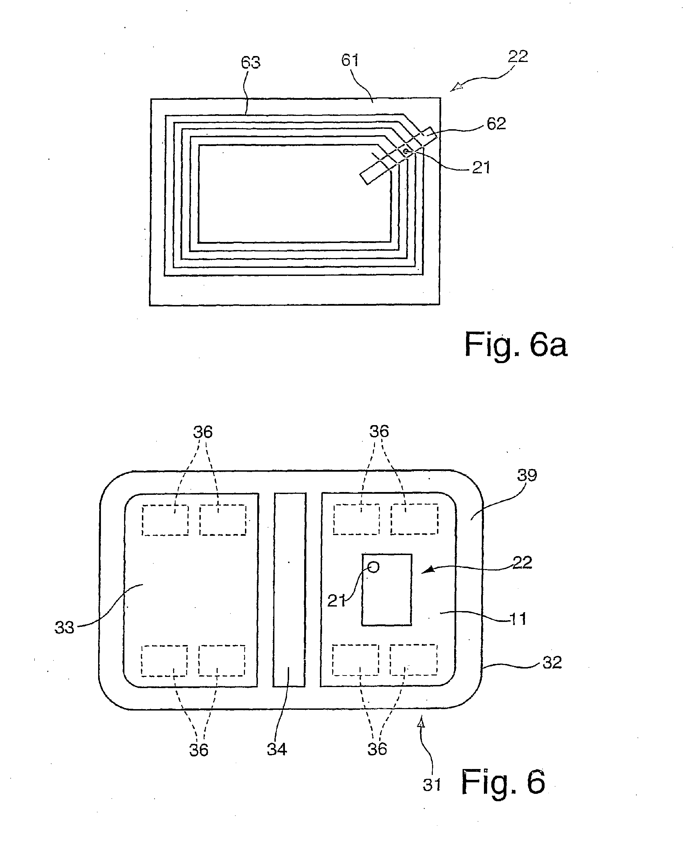

In Figur 6 ist ein Bucheinband 31 dargestellt. Dieser Bucheinband 31 umfasst ein Einbandmaterial 32, welches zumeist aus einem stoffähnlichen Material hergestellt ist. Auf dem Einbandmaterial 32 ist eine Buchdeckeneinlage 33 ohne Datenträger 22 für die Vorderseite eines buchartigen Wertdokumentes vorgesehen. Für die Rückseite ist eine Buchdeckeneinlage 11 vorgesehen. Dazwischen liegend ist eine Rückeneinlage 34 angeordnet. Die Buchrückenverstärkung oder Rückeneinlage 34 besteht zumeist aus einem Papierstreifen. Vorteilhafterweise sind diese drei Einlage 11, 33 und 34 nicht miteinander verbunden. Es können jedoch auch ein- oder zweiteilige Einlagen vorgesehen sein.

Der Datenträger 22 ist bevorzugt in einem mittleren Bereich der Buchdeckeneinlage 11 angeordnet. In den Randbereichen sind Greiferzonen 36 strichliniert dargestellt, welche bevorzugt freigehalten werden, damit in der automatischen Fertigung beim Transportieren des Bucheinbandes 31 eine Beschädigung des Datenträgers 22 durch Greifelemente verhindert ist. Die Anordnung der Greiferzonen 36 ist auf die Positionierung des Datenträgers anzupassen, so dass die Greifzonen an den Datenträger angrenzen und außerhalb des Datenträgers 22 vorgesehen sind. Die Positionierung des Datenträgers 22 ist grundsätzlich beliebig zur Buchdeckeneinlage 11 möglich.

Die Anordnung von einem Datenträger 22 im mittleren Bereich der Buchdeckeneinlage 11 ist nur beispielhaft. Es können in der vorderen und hinteren Buchdeckeneinlage 11 jeweils ein oder mehrere Datenträger 22 vorgesehen sein. Ebenfalls können zumindest Teile des oder der Datenträger 22 sich von der Rückseite bis zur Rückeneinlage 34 oder von der Vorderseite bis zur Rückeneinlage 34 erstrecken. Ebenso ist möglich, dass ein Teil, beispielsweise eine Antenne sich von der Vorderseite über die Rückeneinlage 34 bis zur Rückseite der Buchdeckeneinlage 11 erstreckt. Die Ausgestaltung ist hier anwendungsspezifisch. Es können auch Teile des Datenträgers, bspw. Spulen für die Antenne, in einer Buchdeckeneinlage 11 vorgesehen sein und das Speichermedium oder der Chip in der zweiten Buchdeckeneinlage 11.

In Figur 6a ist vergrößert der in Figur 6 dargestellte Datenträger 22 dargestellt.

Dieser umfasst eine Folie als Träger, auf der ein Mikrochip 21 aufgebracht ist. Über eine Leiterebene 62 ist der Mikrochip 21 mit einer Antenne 63 verbunden, welche durch eine Vielzahl von schlaufenförmig angeordneten Leiterbahnen gebildet ist. Dieser Datenträger 22 ist kontaktlos betreibbar, wobei der Abstand zum Aus- und Einlesen von der Sende- und Empfangsleistung abhängig ist. Hierfür kann die Zahl der Leiterbahnen erhöht werden oder vergrößert werde, zumal die Leiterbahnen sich auch auf der Vorder- und Rückseite erstrecken können. Der Datenträger ist als Transponder ausgebildet. Weiter kontaktlos betreibbare Ausführungsformen sind Ebenfalls einsetzbar. Auch können integrierte Schaltkreise eingebracht werden.

Derzeit werden bevorzugt Datenträger 22 des ID1-Formates eingesetzt, welche bspw. Speicherkapazitäten von 4 KB aufweisen. Die Datenträger 22, welche zum Einsatz kommen, können vielfältig ausgebildet sein, bspw. als RFID-Version, als eine unidirektionale integrierte Schaltung als auch eine bidirektionale Schaltung aufweisen. Ebenso können Chips mit persönlicher Codezahl vorgesehen sein. Des weiteren können Speicher eingebracht werden, welche die Aufnahme von fälschungssicheren Krypto-Programmiertechniken ermöglichen. Die für die Datenträger 22 verwendeten Mikrochips an die Vorgaben der Sicherheit angepasst werden. Die Auslesung der Daten kann in Abhängigkeit der Codierung kapazitiv, magnetisch oder induktiv erfolgen. Die kapazitive und induktive Auslesung kann durch Modulation der Wechselspannung gegeben sein. Des weiteren können auch sogenannte Wiegand-Codierungen vorgesehen sein. Die Informationen werden durch die geometrische Position der Wiegand-Drähte gebildet. Des weiteren können auch kontaktierbare Datenträger eingesetzt werde, wie beispielweise Chips oder Mikromodule ohne Antenne. Die Kontaktstellen können beispielsweise in Motiven integriert sein und durch leitende Farbpigmente gebildet werden.

Sofern in einer Buchdeckeneinlage 11 mehrere Datenträger 22 vorgesehen sind, können die Informationen auch gesplittet werden, so dass ein Teil der Informationen in einem ersten Datenträger, ein weiterer Teil in einem zweiten Datenträger usw. abgespeichert werden. Sofern weitere Sicherheitsmerkmale bewusst sichtbar gemacht sind, können diese auch mittels Licht oder einer emittierten Strahlung ausgelesen werden. Alternativ oder zusätzlich können auch Infrarot-Codierungen vorgesehen sein.

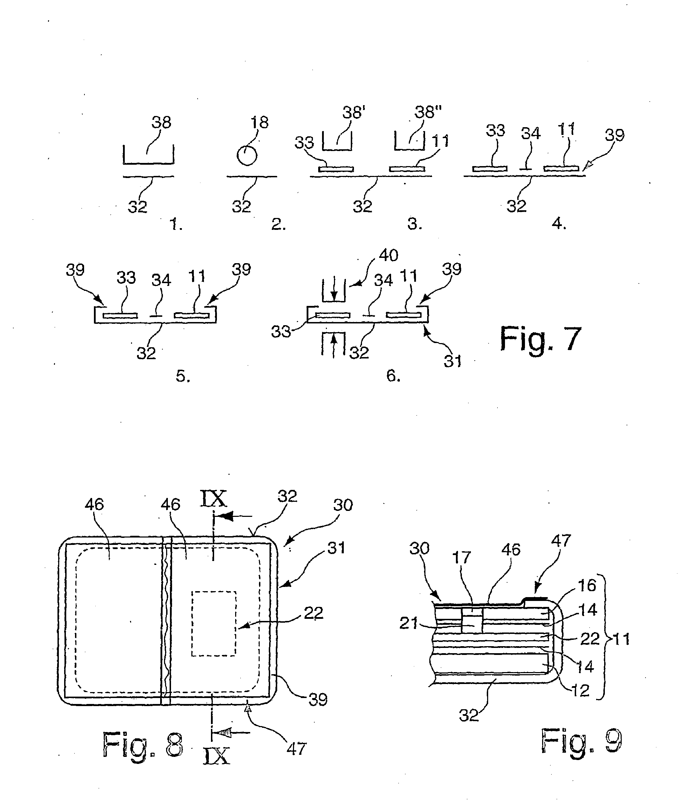

In Figur 7 sind die einzelnen Schritte für den Herstellungsprozess eines Bucheinbandes 31 dargestellt. Aus einem Magazin 38 wird das Einbandmaterial 32 bereitgestellt. Eine Seite des Einbandmaterials 32 wird beispielsweise über eine Rolle 18 mit einem Klebemittel versehen. Bevorzugt wird organischer Leim verwendet, welcher schnell abbindet. In einem nächsten Schritt wird aus einem ersten Magazin 38' eine Buchdeckeneinlage 33 und aus einem zweiten Magazin 38" eine Buchdeckeneinlage 11 aufgebracht. Gleichzeitig oder in einem nachfolgenden Schritt kann die Rückeneinlage 34 dazwischen positioniert werden. Die Randbereiche 39 des Einbandmaterials 32 werden umgeschlagen und mit den Buchdeckeneinlagen 33 und 11 verklebt. Im Anschluss daran erfolgt eine Heißfolienprägung 40 bzw. ein Prägeverfahren auf der Vorderseite des Bucheinbandes 31. In Abhängigkeit der Prägung ist die Position des Datenträgers 22 abzustimmen, damit außerhalb des Bereiches des zumindest einen Datenträgers 22 die Prägung erfolgt oder außerhalb der Prägung der Datenträger 22 positioniert wird.

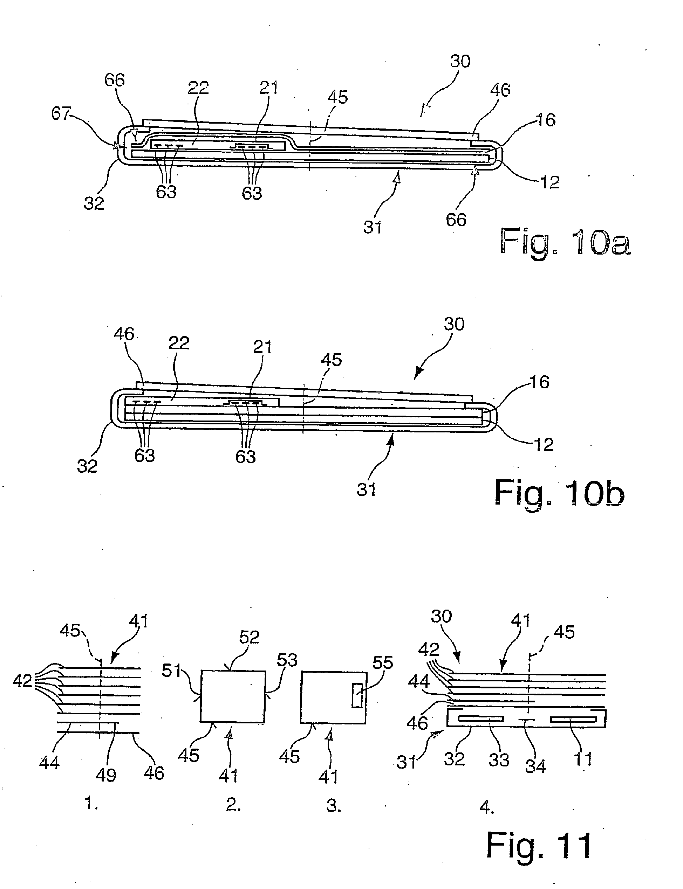

In Figur 8 und 9 ist ein erfindungsgemäßes buchartiges Wertdokument 30 dargestellt. Dieses buchartige Wertdokument 30 ist aufgebaut aus einem Bucheinband 31, einem Buchblock 41 und einer Passkarte 44 (Figur 10). In der Draufsicht auf Figur 8 sind die einzelnen Seiten des Buchblockes 41 als auch die Passkarte 44 nicht dargestellt. Üblicherweise umfasst bei einem Reisepass der Buchblock 32 Seiten aus einem Einheitspapier mit Sicherheitsmerkmalen. Die Passkarte 44, welche bevorzugt mit dem Buchblock 41 vernäht ist, ist personifiziert.

Die Draufsicht zeigt, dass der Vorsatz 46 des Buchblockes 41 auf dem Bucheinband 31 gemäß Figur 9 aufgeklebt ist, so dass ein Überlappungsbereich 47 des Vorsatzes 46 zum umgeschlagenen Einbandmaterial 32 gegeben ist. Dadurch ist die Buchdeckeneinlage 11 vollständig umhüllt.

In Figur 9 ist bspw. eine Schnittdarstellung durch die Rückseite des buchartigen Wertdokumentes 30 gemäß Figur 8 dargestellt. In diesem Ausführungsbeispiel ist eine Buchdeckeneinlage 11 gemäß Figur 1 eingebracht. Bei der Ausgestaltung eines verstärkten Vorsatzes 46 ist eine Schließung der Lochung 17 nicht erforderlich. Die Lochung 17 umfasst bspw. einen Durchmesser von 4 mm, so dass deren Aussparung nach Aufbringen des Vorsatzes 46 nicht fühlbar ist.

In Figur 10a ist eine schematische Schnittdarstellung durch ein buchartiges Wertdokument 30 dargestellt, welches eine alternative Ausführungsform zu Figur 8 darstellt. In diesem Ausführungsbeispiel ist die erste Schicht 12 und die zumindest eine weitere Schicht 16 aus einer polymeren Laminatschicht ausgebildet. Zwischen der Schicht 12 und der Schicht 16 ist ein Datenträger 22 mit einem Mikrochip 21 vorgesehen. Die Laminatschichten 12, 16 weisen einen äußeren, umlaufenden, geschlossenen Rand 66 auf, durch welchen der Datenträger 22 vollständig umschlossen und zwischen den Schichten 12, 16 eingebettet ist. Der Datenträger 22 erstreckt sich bis zur Naht 45, so dass ein Öffnen und Schließen des Bucheinbandes 31 ohne Beeinträchtigung des Datenträgers 22 ermöglicht ist. Die Laminatschicht 12, 16 wird bevorzugt durch ein Rollenlaminier- oder ein Prägepressverfahren hergestellt, wobei das Laminieren unter Druck und/oder unter Temperatur erfolgt. Nach dem Herstellen der Laminatschichtumhüllung 67 durch die zumindest zwei Laminatschichten 12, 16 werden die Ränder gestanzt und/oder beschnitten, um diese Laminatschichtumhüllung 67 mit einem Einbandmaterial 32 zumindest auf der Außenseite zu umhüllen, so dass nach Aufbringen des Vorsatzes 46 ein Bucheinband 31 hergestellt ist. Die zum Vorsatz 46 weisende Schicht 16 kann in der Dicke an die Dicke des Datenträgers 22 mit Mikrochip 21 angepasst sein, so dass die Buchdeckeneinlage 33 sowohl auf der Vorderseite als auch auf der Rückseite gleich dick ausgebildet ist. Alternativ kann vorgesehen sein, dass die Schicht 12 und 16 unterschiedlich dick ausgebildet sind oder zumindest teilweise Ausstanzungen aufweisen, um den Mikrochip 21 aufzunehmen, um ebenfalls eine gleichmäßige Dicke einer Buchdeckeneinlage 33 auszubilden. Des Weiteren kann, wie im Ausführungsbeispiel dargestellt, die Vorder- oder Rückseite eine größere Dicke aufweisen, wohingegen die Rückseite oder Vorderseite eine geringere Dicke umfassen können.

Die aus den polymeren Laminatschichten 12, 16 gebildete Laminatschichtumhüllung 67 kann auch ohne Einbandmaterial 32 oder mit teilweise ausgestanztem Einbandmaterial 32 versehen sein, so dass die äußere Laminatschicht zumindest teilweise sichtbar ist und beispielsweise eine eingebettete Seite mit Informationen sichtbar ist.

In Figur 10b ist eine alternative Ausführungsform zu Figur 10a dargestellt. Bei dieser Ausführungsform ist der Datenträger 22 mit einem Mikrochip 21 auf einer polymeren Laminatschicht 16 aufgebracht, wobei der Datenträger 22 bevorzugt derart ausgebildet ist, dass dieser bis zur Naht 45 reicht, bzw. kurz davor berandet vorgesehen ist. Das Einbandmaterial 32 umgibt die Laminatschicht 16, wobei die Ränder des Einbandmateriales von einem Vorsatz 46 überdeckt sind. Gemäß dem Ausführungsbeispiel kann vorgesehen sein, dass die Schicht 16 durch die Schicht 12 verstärkt ist. Somit kann zwischen die Schicht 12 und die Schicht 16 eine Innenseite mit Sicherheitsmerkmalen oder dergleichen zur Erhöhung der Anzahl der Sicherheitsmerkmale eingebracht sein.

Alternativ zu der in Figur 10b dargestellten Ausführungsform kann vorgesehen sein, dass der Datenträger 22 mit Mikrochip 12 auf dem Vorsatz 46 vorgesehen ist, wobei der Vorsatz 46 durch die Laminatschicht 16 ausgebildet ist und das Einbandmaterial durch die Laminatschicht 12 vorgesehen ist. Des Weiteren kann bei diesem Ausführungsbeispiel auf den Datenträger 22 mit Mikrochip 21 eine weitere Overlayfolie oder dergleichen aufgebracht werden. Diese zu Figur 10b beschriebenen Ausführungsformen stellen ebenfalls einen flexiblen Bucheinband 31 dar.

Alternativ kann auch vorgesehen sein, dass der Bucheinband 31 auf der Vorder- oder Rückseite als flexibler Bucheinband 31 ausgebildet ist und die Rück- oder Vorderseite als harter Bucheinband 31 hergestellt wird.

Eine weitere beliebige Kombination der beschriebenen Ausführungsformen zur Aufnahme von zumindest einem Datenträger 22 mit einem Mikrochip 21 ist möglich. Ebenso kann eine Schicht 12, 16 aus Pappe, Karton oder dergleichen ausgebildet sein und die zumindest eine weitere Schicht 12, 16 durch eine polymere Laminatschicht vorgesehen sein, um den zumindest einen Datenträger 22 zwischen der ersten Schicht 12 und der zumindest einen weiteren Schicht 16 zu positionieren und fixieren.

In Figur 11 ist der Herstellungsprozess des buchartigen Wertdokumentes 30 dargestellt. In einem ersten Schritt werden einzelne Seiten 42 zu einem Buchblock 41 geordnet und die Passkarte 44 sowie der Vorsatz 46 durch bspw. die Herstellung einer Naht 45 miteinander verbunden. Die Passkarte 44 weist einen Randbereich 49 auf, der über die Verbindungsnaht 45 hinaussteht. Im nachfolgenden Arbeitsschritt wird der Buchblock 41 zusammengefaltet und an den Seiten 51, 52 und 53 auf Format geschnitten, um diesen Buchblock 41 einer Bucheinhängemaschine zuzuführen. Dabei werden der vordere und hintere Vorsatz 46 auf den Bucheinband 31 aufgeklebt, um das buchartige Wertdokument 30 ist fertiggestellt. Zwischen dem Arbeitsschritt des Formatschneidens des Buchblocks 41 und dem Einhängen in den Bucheinband 32 erfolgt eine Personalisierung 55 des geschnittenen Buchblockes 41, indem eine Perforation in die Seiten des Buchblockes 41 eingebracht wird, welche z. b. der Personenkennziffer oder anderen personenbezogenen Daten der Passkarte 44 entsprechen.

Die einzelnen Verfahrensschritte gemäß Figur 5, 7 und 11 können auch in einer Arbeitslinie miteinander verkettet sein. Alternativ können auch einzelne oder mehrere Arbeitsschritte in einer vertauschten Abfolge vorgesehen sein, um eine automatische Fertigung zu optimieren.

## Patentansprüche

1. Verfahren zur Herstellung einer Buchdeckeneinlage (11) für einen Bucheinband (31),
bei dem eine erste Schicht (12), wenigstens eine zweite Schicht (16) und zumindest ein Datenträger (22) mit Mikrochip bereitgestellt wird,
- bei dem in zumindest eine Schicht (12, 16) eine Ausprägung (24, 26) oder Lochung (17) zur Aufnahme zumindest eines Teils des Datenträgers (22) eingebracht wird,
- bei dem zumindest auf einer Innenseite (13) der zumindest einen ersten Schicht (12) oder einer Oberfläche des zumindest einen Datenträgers (22) mit Mikrochip, der der Innenseite (13) der zumindest einen ersten Schicht (12) zugewandt ist, eine Klebeschicht (14) eingebracht wird,
- bei dem zumindest auf einer Innenseite (13) der zumindest einen zweiten Schicht (16) oder einer Oberfläche des zumindest einen Datenträgers (22) mit Mikrochip, der der Innenseite (13) der zumindest einen zweiten Schicht (16) zugewandt ist, eine Klebeschicht (14) eingebracht wird,
- bei dem der zumindest eine Datenträger (22) mit Mikrochip zur zumindest einen Schicht (12, 16) mittels Ausprägungen (24, 26) oder Lochung (17) positioniert wird und bei dem die zumindest eine erste Schicht (12), der Datenträger (22) mit Mikrochip und die zumindest eine zweite Schicht (16) unter leichtem Druck zu einem Verbund (28) miteinander verbunden werden,
- bei dem unmittelbar nach dem Herstellen des Verbundes (28) der verklebte Verbund (28) auf ein Endformat (37) gestanzt Wird und die Stanzung auf das Endformat (37) auf ein Referenzmaß ausgerichtet wird, auf welches die Lochung (17) oder Ausprägungen (24, 26) abgestellt sind.

2. Verfahren nach Anspruch 1, **dadurch gekennzeichnet, dass** die erste und zumindest eine weitere Schicht (12, 16) aus gleichem Material ausgebildet sind und vor dem Verbinden zu einem Verbund (28) die Richtung der Papierfasern der ersten und zumindest einen weiteren Schicht (12, 16) gleichsinnig ausgerichtet werden.

3. Verfahren nach Anspruch 1, **dadurch gekennzeichnet, dass** die zumindest eine Schicht (12, 16) aus verstärktem Papier, Pappe oder Karton auf einer Seite eine glatte und auf der anderen Seite eine raue Oberfläche aufweist und dass die Klebeschicht (14) auf der rauen Oberfläche aufgebracht wird.

4. Verfahren nach Anspruch 1, **dadurch gekennzeichnet, dass** die erste und zumindest eine weitere Schicht (12, 16) aus zumindest einer polymeren Laminatschicht ausgebildet sind, so dass der Verbund (28) mit einem zumindest den einen Datenträger (22) umlaufenden Rand (66) hergestellt wird.

5. Verfahren nach einem der vorherigen Ansprüche, **dadurch gekennzeichnet, dass** die erste und zumindest eine weitere Schicht (12, 16) durch Erwärmung eines Heißschmelzklebemittels mit einer Obergrenze für eine Erwärmungstemperatur von 200° C zusammengefügt werden.

6. Verfahren nach Anspruch 1, **dadurch gekennzeichnet, dass** der zumindest eine Datenträger (22) zur zumindest einen Schicht (12, 16) außerhalb einer Greiferzone (36) der Buchdeckeneinlage (11) positioniert wird.

7. Verfahren zur Herstellung eines buchartigen Wertdokumentes mit mindestens einer nach Anspruch 1 hergestellten Buchdeckeneinlage, **dadurch gekennzeichnet, dass** zumindest zwei Buchdeckeneinlagen (11, 33; 11) positioniert werden, dass zumindest eine Buchdeckeneinlage (11) zumindest einen Datenträger (22) mit Mikrochip umfasst, dass das Einbandmaterial (32) mit zumindest einer Schicht (12, 16) der jeweiligen Buchdeckeneinlage (11, 33; 11) verklebt und einseitig eingeschlagen wird, dass ein Buchblock (41) dem Bucheinband (31) zugeführt und in diesen eingehängt wird und dass nach dem Einhängen des Buchblockes (41) in den Bundeinband (31) jeweils ein Vorsatz (46) auf die innere Vorder- und Rückseite des Bucheinbandes (31) aufgeklebt wird.

8. Verfahren nach Anspruch 7, **dadurch gekennzeichnet, dass** eine Buchdeckeneinlage (11) mit zumindest einem Datenträger (22) als Rückseite auf dem Einbandmaterial (32) und eine Buchdeckeneinlage (33) ohne Datenträger (22) mit Mikrochip als Vorderseite auf das Einbandmaterial (32) für einen Bucheinband (31) zugeführt werden.

9. Verfahren nach Anspruch 7, **dadurch gekennzeichnet, dass** in einem Bereich außerhalb und benachbart zum Datenträger (22) mit Mikrochip ein weiterer Bearbeitungsvorgang (40), vorzugsweise eine Beschichtung, Beschriftung, Prägung oder Heißprägung, durchgeführt wird.

10. Buchdeckeneinlage für einen Bucheinband (31), welche zumindest einen Datenträger (22) mit Mikrochip zwischen zumindest einer ersten und zumindest einer weiteren Schicht (12, 16) umfasst und innerhalb der zumindest zwei Schichten (12, 16) oder an einer Außenseite der zumindest zwei Schichten (12, 16) angrenzend positioniert ist, wobei in zumindest eine Schicht (12, 16) eine Ausprägung (24, 26) oder Lochung (17) zur Aufnahme zumindest eines Teils des Datenträgers (22) eingebracht ist, wobei der Datenträger (22) und die zumindest erste und weitere Schicht (12, 16) zu einem Verbund (28) verklebt sind, **dadurch gekennzeichnet, dass** der Verbund (28) auf ein Endformat gestanzt ist, wobei die Stanzung des Endformates auf ein Referenzmaß ausgerichtet ist, auf das die Lochung (17) oder Ausprägungen (24, 26) abgestellt ist.

11. Buchdeckeneinlage nach Anspruch 10, **dadurch gekennzeichnet, dass** die erste oder zumindest eine weitere Schicht (12, 16) eine Schichtdicke aufweisen, die jeweils gleich oder kleiner als die Gesamtschichtdicke oder die Dicke eines Verbundes (28) sind, welcher aus mehreren Schichtdicken besteht, ausgebildet ist.

12. Buchdeckeneinlage nach Anspruch 10, **dadurch gekennzeichnet, dass** eine erste und eine zweite Schicht (12, 16) aus Verstärktem Papier, Pappe oder Karton vorgesehen ist, welche die gleiche Wandstärke aufweisen.

13. Buchdeckeneinlage nach Anspruch 10, **dadurch gekennzeichnet, dass** zumindest eine erste Schicht (12) aus verstärktem Papier, Pappe, Karton oder dergleichen ausgebildet ist, weiche eine Ausprägung (24, 26) oder Lochung (17) aufweist, in welcher der zumindest eine Teil des Datenträgers (22) und die zumindest eine weitere Schicht (16) vorgesehen ist.

14. Buchdeckeneinlage nach Anspruch 13, **dadurch gekennzeichnet, dass** die zumindest eine weitere Schicht (16) als ein Klebemittel, ein fließfähiger und aushärtbarer Kunststoff, eine Einbettmasse oder dergleichen ausgebildet ist.

15. Buchdeckeneinlage nach Anspruch 10, **dadurch gekennzeichnet, dass** die zumindest eine erste Schicht (12) weitere Sicherheitsmerkma le umfasst.

16. Buchartiges Wertdokument mit einer Buchdeckeneinlage nach Anspruch 10, mit einem Einbandmaterial (32), mit einem einen Vorsatz (46) aufweisenden Buchblock (41), **dadurch gekennzeichnet, dass** die Buchdeckeneinlage (11) von dem Einbandmaterial (32) eingeschlagen ist, dass ein Vorsatz (46) des Buchblockes (41) mit dem umgeschlagenen Einbandmaterial (32) des Bucheinbandes (31) einen Überlappungsbereich (47) bildet.

17. Buchartiges Wertdokument nach Anspruch 16, **dadurch gekennzeichnet, dass** der Buchblock (41) eine Passkarte (44) umfasst und zumindest personifizierte Daten in dem zumindest einen Datenträger (22) abgespeichert sind.

18. Buchartiges Wertdokument nach Anspruch 16, **dadurch gekennzeichnet, dass** zumindest ein erster Datenträger (22) einen Teil der Personendaten einer Passkarte (44) oder des Buchblockes (41) umfasst und dass auf zumindest einem weiteren Datenträger (22) mit Mikrochip ein weiterer Teil der Informationen, der ergänzend ist oder dem Teil der ersten Information entspricht, abgespeichert ist.

19. Buchartiges Wertdokument nach Anspruch 16, **dadurch gekennzeichnet, dass** in einer Passkarte (44) oder einer Seite des Buchblockes (41) zumindest ein weiterer Datenträger (22) vorgesehen ist.

20. Buchartiges Wertdokument nach Anspruch 16, **dadurch gekennzeichnet, dass** der Vorsatz (46) des Buchblockes (41) aus einem Papier mit einem Gewicht von mehr als 80g/m² ausgebildet ist.

21. Buchartiges Wertdokument nach Anspruch 16, **gekennzeichnet durch** die Verwendung als Reisepass oder Passbuch.

## Claims

1. A method for the production of a book cover insert (11) for a book binding (31),
- in which one first layer (12), at least one second layer (16) and at least one data carrier (22) with microchip are provided,
- in which a cutout (24, 26) or perforation (17) for receiving at least one part of the data carrier (22) is introduced into at least one layer (12, 16)
- in which an adhesive layer (14) is introduced at least on an inner side (13) of the at least one first layer (12) or a surface of the at least one data carrier (22) with microchip which faces the inner side (13) of the at least one first layer (12),
- in which an adhesive layer (14) is introduced at least on an inner side (13) of the at least one second layer (16) or a surface of the at least one data carrier (22) with microchip which faces the inner side (13) of the at least one second layer (16),
- in which the at least one data carrier (22) with microchip is positioned to the cutout (24, 26) or perforation (17) of the at least one layer (12, 16) and the at least one first layer (12), the data carrier (22) with microchip and the at least one second layer (16) are connected to one another under slight pressure to form a composite (28),
- in which in a subsequent working step after the production of the composite (28), the adhesively bonded composite (28) is stamped to a final format (37) and the stamping to the final format (37) is tailored to a reference size to which the perforation (17) or the cutout (24, 26) is also geared.

2. The method as claimed in claim 1, **characterized in that** the first and at least one further layer (12, 16) are formed from the same material and, prior to the connection to form a composite (28), the direction of the paper fibers of the first and at least one further layer (12, 16) are oriented in the same sense.

3. The method as claimed in claim 1, **characterized in that** the at least one layer (12, 16) made of reinforced paper, paperboard or cardboard has a smooth surface on one side and a rough surface on the other side, and **in that** the adhesive layer (14) is applied on the rough surface.

4. The method as claimed in claim 1, **characterized in that** the first and at least one further layer (12, 16) are formed from at least one polymeric laminate layer, so that a composite (28) with a circumferential edge (66) around at least the one data carrier (22) is produced.

5. The method as claimed in one of the preceding claims, **characterized in that** the first and at least one further layer (12, 16) are joined together by heating a hot melt adhesive with an upper limit for a heating temperature of 200°C.

6. The method as claimed in claim 1, **characterized in that** the at least one data carrier (22) is positioned with respect to the at least one layer (12, 16) outside a gripper zone (36) of the book cover insert (11).

7. A method for the production of a book-type security document with at least one book cover insert which is produced according to claim 1, **characterized in that** at least two book cover inserts (11, 33; 11) are positioned, that at least one book cover insert (11) comprising at least one data carrier (22) with microchip, that the binding material (32) is adhesively bonded and folded in on one side with at least one layer (12, 16) of the respective book covert insert (11, 33; 11), that a book block (41) is supplied to the book binding (31) and inset in the latter and that when the book block (41) is inset in the bundle binding (31), an endpaper (46) is in each case adhesively bonded onto the inner front and rear sides of the book binding (31).

8. The method as claimed in claim 7, **characterized in that** a book cover insert (11) with at least one data carrier (22) is supplied as rear side on the binding material (32) and a book cover insert (33) without a data carrier (22) with microchip is supplied as front side onto the binding material (32) for a book binding (31).

9. The method as claimed in claim 7, **characterized in that** a further processing operation (40), preferably a coating, inscription, embossing or hot embossing, is carried out in a region outside and adjacent to the data carrier (22) with microchip.

10. A book cover insert for a book binding (31) which comprises at least one data carrier (22) with microchip between at least one first and at least one further layer (12, 16) and is positioned within the at least two layers (12, 16) or in a manner adjoining an outer side of the at least two layers (12, 16), whereby in at least one layer (12, 16) a cutout (24, 26) or perforation (17) for receiving at least one part of the data carrier (22) is introduced, whereby the data carrier (22) und the at least first and further layer (12, 16) are adhesively bonded to a composite (28), **characterized in that** the composite (28) is stamped to the final format, whereby the stamping of the final format is tailored to a reference size to which the perforation (17) or the cutout (24, 26) is geared.

11. The book cover insert as claimed in claim 10, **characterized in that** the first or at least one further layer (12, 16) have a layer thickness which are in each case less than or equal to the total layer thickness or the thickness of a composite (28) which comprises is formed from a plurality of layer thicknesses.

12. The book cover insert as claimed in claim 10, **characterized in that** a first and a second layer (12, 16) made of reinforced paper, paperboard or cardboard is provided, which have the same wall thickness.

13. The book cover insert as claimed in claim 10, **characterized in that** at least one first layer (12) is formed from reinforced paper, paperboard, cardboard or the like, which has a cutout (24, 26) or perforation (17) in which the at least one part of the data carrier (22) and the at least one further layer (16) are provided.

14. The book cover insert as claimed in claim 13, **characterized in that** the at least one further layer (16) is formed as an adhesive, a flowable and curable plastic, an embedding composition or the like.

15. The book cover insert as claimed in claim 10, **characterized in that** the at least one first layer (12) comprises further security features.

16. Book-type security document with a book cover insert as claimed in claim 10, with a binding material (32), with a book block (41) comprising an endpaper (46), **characterized in that** the book cover insert (11) is covered by a bundle binding (32), that an endpaper (46) of the book block (41) is building an overlap area (47) with the covered binding material (32) of the bundle binding (31).

17. The book-type security document as claimed in claim 16, **characterized in that** the book block (41) comprises a pass card (44) and at least personalized data are stored in the at least one data carrier (22).

18. The book-type security document as claimed in claim 16, **characterized in that** at least one first data carrier (22) comprises one portion of the personal data of a pass card (44) or of the book block (41), and **in that** a further portion of the items of information, which is supplementary or corresponding to the first items of information, is stored on at least one further data carrier (22) with microchip.

19. The book-type security document as claimed in claim 16, **characterized in that** at least one further data carrier (22) is provided in the pass card (44) or a side of the book block (41).

20. The book-type security document as claimed in claim 16, **characterized in that** the endpaper (46) of the book block (41) is formed from a paper having a weight of more than 80 g/m².

21. The book-type security document as claimed in claim 16, **characterized by** the use as a passport or pass book.

## Revendications

1. Procédé destiné à fabriquer un papier couverture de livret (11) pour une reliure (31);
- lors duquel une première couche (12), au moins une deuxième couche (16) et au moins un support de données (22) avec puce sont mis à disposition,
- lors duquel un embossage (24, 26) ou une perforation (17) permettant de recevoir au moins une partie du support de données (22) est effectué(e) dans au moins une couche (12, 16),
- lors duquel une couche de collage (14) est appliquée au moins sur une face intérieure (13) de ladite au moins une première couche (12) ou sur une surface dudit au moins un support de données (22) avec puce qui est tourné vers la face intérieure (13) de ladite au moins une première couche (12),
- lors duquel une couche de collage (14) est appliquée au moins sur une face intérieure (13) de ladite au moins une deuxième couche (16) ou sur une surface dudit au moins un support de données (22) avec puce qui est tourné vers la face intérieure (13) de ladite au moins une deuxième couche (16),
- lors duquel ledit au moins un support de données (22) avec puce est positionné à ladite au moins une couche (12, 16) avec d'embossages (24, 26) ou d'une perforation (17) et lors duquel ladite au moins une première couche (12), le support de données (22) avec puce et ladite au moins une deuxième couche (16) sont assemblés avec une légère pression pour former un composite (28),
- lors duquel, immédiatement après la fabrication du composite (28), le composite collé (28) est découpé à un format définitif (37) et le découpage au format définitif (37) est orienté par rapport à une mesure de référence en fonction de laquelle s'effectue la réalisation de la perforation (17) ou des embossages (24, 26).

2. Procédé selon la revendication 1, **caractérisé en ce que** la première et ladite au moins une autre couche (12, 16) sont réalisées dans un même matériau et que, avant l'assemblage en un composite (28), les fibres de papier de la première et de ladite au moins une autre couche (12, 16) sont orientées de manière à être dans le même sens.

3. Procédé selon la revendication 1, **caractérisé en ce que** ladite au moins une couche (12, 16) en papier renforcé, carton-pâte ou carton présente, sur une face, une surface lisse et, sur l'autre face, une surface rugueuse, et **en ce que** la couche de collage (14) est appliquée sur la surface rugueuse.

4. Procédé selon la revendication 1, **caractérisé en ce que** la première et ladite au moins une autre couche (12, 16) sont fabriquées en au moins une couche laminée polymère de sorte que le composite (28) est réalisé avec un bord (66) s'étendant au moins autour dudit support de données (22).

5. Procédé selon l'une quelconque des revendications précédentes, **caractérisé en ce que** la première et ladite au moins une autre couche (12, 16) sont assemblées par échauffement d'une colle thermofusible avec une limite maximale de température d'échauffement de 200° C.

6. Procédé selon la revendication 1, **caractérisé en ce que** ledit au moins un support de données (22) est positionné par rapport à ladite au moins une couche (12, 16) à l'extérieur d'une zone de manipulation (36) du papier couverture de livret (11).

7. Procédé destiné à fabriquer un document de valeur de type livret avec au moins un papier couverture de livret réalisé selon la revendication 1, **caractérisé en ce qu'**au moins deux papiers couverture de livret (11, 33; 11) sont positionnés, qu'au moins un papier couverture de livret (11) comprend au moins un support de données (22) avec puce, que le matériau de reliure (32) est collé avec au moins une couche (12, 16) du papier couverture de livret respectif (11, 33; 11) et est plié sur un côté, qu'un bloc de livret (41) est ajouté à la reliure (31) et est emboîté dans celle-ci, et qu'une page de garde (46) est, après que le bloc de livret (41) a été emboîté dans la reliure (31), respectivement collée sur la face intérieure avant et la face intérieure arrière de la reliure (31).

8. Procédé selon la revendication 7, **caractérisé en ce qu'**un papier couverture de livret (11) avec au moins un support de données (22) est ajouté en tant que face arrière sur le matériau de reliure (32) et qu'un papier couverture de livret (33) sans support de données (22) avec puce est ajouté en tant que face avant sur le matériau de reliure (32) pour une reliure (31).

9. Procédé selon la revendication 7, **caractérisé en ce qu'**une opération de traitement supplémentaire (40), de préférence un revêtement, une inscription, un estampage ou un estampage à chaud, est effectuée dans une zone située à l'extérieur du support de données (22) avec puce et voisine de celui-ci.

10. Papier couverture de livret pour une reliure (31) lequel comprend, entre au moins une première et au moins une autre couche (12, 16), au moins un support de données (22) avec puce et est positionné à l'intérieur des au moins deux couches (12, 16) ou, de manière contiguë à une face extérieure des au moins deux couches (12, 16), dans au moins une couche (12, 16) étant effectué(e) un embossage (24, 26) ou une perforation (17) permettant de recevoir au moins une partie du support de données (22), le support de données (22) et ladite au moins une première couche ainsi que l'adite au moins une autre couche (12, 16) étant collés ensemble pour former un composite (28), **caractérisé en ce que** le composite (28) est découpé à un format définitif, le découpage au format définitif étant orienté par rapport à une mesure de référence en fonction de laquelle s'effectue la réalisation de la perforation (17) ou des embossages (24, 26).

11. Papier couverture de livret selon la revendication 10, **caractérisé en ce que** la première ou ladite au moins une autre couche (12, 16) présente une épaisseur de couche qui est respectivement égale ou inférieure à l'épaisseur de couche totale ou à l'épaisseur d'un composite (28) qui est constitué de plusieurs épaisseurs de couche.

12. Papier couverture de livret selon la revendication 10, **caractérisé en ce qu'**il est prévu une première et une deuxième couche (12, 16) en papier renforcé, carton-pâte ou carton qui présentent la même épaisseur de paroi.

13. Papier couverture de livret selon la revendication 10, **caractérisé en ce qu'**au moins une première couche (12) est réalisée en papier renforcé, carton-pâte, carton ou en un matériau semblable et présente un embossage (24, 26) ou une perforation (17) dans lequel ou laquelle sont prévues ladite au moins une partie du support de données (22) et ladite au moins une autre couche (16).

14. Papier couverture de livret selon la revendication 13, **caractérisé en ce que** ladite au moins une autre couche (16) est réalisée sous la forme d'une substance adhésive, une matière plastique fluide et durcissable, une matière d'enrobage ou une matière semblable.

15. Papier couverture de livret selon la revendication 10, **caractérisé en ce que** ladite au moins une première couche (12) comprend d'autres caractéristiques de sécurité.

16. Document de valeur de type livret muni d'un papier couverture de livret selon la revendication 10, d'un matériau de reliure (32), d'un bloc de livret (41) présentant une page de garde (46), **caractérisé en ce que** le papier couverture de livret (11) est recouvert par le matériau de reliure (32), qu'une page de garde (46) du bloc de livret (41) forme, avec le matériau de reliure rabattu (32) de la reliure (31), une zone de recouvrement (47).

17. Document de valeur de type livret selon la revendication 16, **caractérisé en ce que** le bloc de livret (41) comprend une carte de passeport (44) et qu'au moins des données personnalisées sont enregistrées dans ledit au moins un support de données (22).

18. Document de valeur de type livret selon la revendication 16, **caractérisé en ce qu'**au moins un premier support de données (22) comprend une partie des données personnelles d'une carte de passeport (44) ou du bloc de livret (41) et qu'une autre partie des informations qui est complémentaire ou correspond à la partie de l'information première est enregistrée sur au moins un autre support de données (22) avec puce.

19. Document de valeur de type livret selon la revendication 16, **caractérisé en ce qu'**au moins un autre support de données (22) est prévu dans une carte de passeport (44) ou une page du bloc de livret (41).

20. Document de valeur de type livret selon la revendication 16, **caractérisé en ce que** la page de garde (46) du bloc de livret (41) est réalisée dans un papier ayant un poids supérieur à 80g/m².

21. Document de valeur de type livret selon la revendication 16 **caractérisé par** son utilisation en tant que passeport ou livret bancaire.
